# EUROPEAN PATENT APPLICATION

(11) **EP 3 597 521 A1**
(43) Date of publication of application: **22.01.2020**
(21) Application number: 19187681.2
(22) Date of filing: 22.07.2019
(51) Int. Cl.: B62M 1/12, B62M 1/28

(54) **BICYCLE WITH TELESCOPIC STEERING SYSTEM**

(30) Priority: 20.07.2018 BE 201800083
(71) Applicant: Codex Atlanticus BVBA, 2360 Oud-Turnhout (BE)
(72) Inventor: Leterme, Pierre, 2360 Oud-Turnhout (BE); Van Gestel, Nathalie, 2360 Oud-Turnhout (BE); Zhu, Zhu, 2360 Oud-Turnhout (BE)
(74) Representative: Clerinx, Peter Albert I.

(57) **Abstract**

A bicycle (1) comprising a front fork (2) with a front wheel (3), a rear wheel (4) with at least one first sprocket wheel (5), a frame (7) with a bottom bracket axle (8) with at least one second sprocket wheel (6) coupled to the first sprocket wheel via a chain (9), two pedals (10) attached to the bottom bracket axle for exerting a first torque on the bottom bracket axle, handlebars (11) for rotating the front wheel around an upright axis, wherein the handlebars (11) comprise a rod and wherein the front fork (2) comprises a sliding sleeve or sliding tube for receiving the rod so that the handlebars can slide in an up and down movement relative to the sliding sleeve or sliding tube, wherein the bottom bracket axle comprises a first and a second freewheel clutch (12, 13), and wherein the bicycle further comprises a force transmission mechanism (14) which converts the up and down movement of the handlebars (11) into opposite rotations of the first and second freewheel clutch (12, 13) for selectively exerting a second and third torque on the bottom bracket axle.

## Description

### Field of the invention

The invention relates generally to a bicycle, more particularly to a mechanical bicycle with a plurality of drive mechanisms.

### Background of the invention

Bicycles have been around for more than two hundred years (as described, for example, in https://nl.wikipedia.org/wiki/Geschiedenis_van_de_fiets). For example, US59915 from 1866 describes a bicycle with a front wheel with two pedals, directly connected to the axle of the front wheel.

Bicycles are widely distributed, and are used (in 2018) by hundreds of millions, if not billions of people. Relevant for the present invention are especially bicycles with a chain drive, but they too have been around for 150 years. Of course, a lot of improvements have been made over time, such as the use of freewheel clutches, so that it is no longer necessary to always pedal along (which is especially useful when going downhill), or the use of multiple sprocket wheels and a derailleur for a bicycle with multiple gears.

A problem that many cyclists experience is that they will sooner or later suffer from knee pain, because all power must be delivered via the pedals. This problem is greatly reduced by electric bicycles, but these have other disadvantages, such as the cost of purchasing and maintenance, mainly due to the limited battery life.

Another problem is the formation of lactic acid in the leg muscles due to the high amount of energy supplied by the legs during cycling. This can lead to an unpleasant feeling during or after cycling due to acidosis.

There is a need for a bicycle that cannot only be driven via pedals.

### Summary of the invention

It is an object of the present invention to provide a mechanical bicycle with a plurality of drive mechanisms.

It is a specific object of embodiments of the present invention to provide a mechanical bicycle with a first drive mechanism of the rear wheel by applying force to pedals, and with a second driving mechanism by applying force to the handlebars.

It is an object of specific embodiments of the present invention to provide a mechanical bicycle with a power transmission from the handlebars to the rear wheel.

It is an advantage of embodiments of the present invention that a user can exert a substantial force with the arms to propel the bicycle without thereby endangering stability while riding and/or without thereby hindering steering. In addition, steering can feel almost identical in comparison to steering a conventional bicycle.

This and other objects are addressed by a bicycle according to embodiments of the present invention.

According to a first aspect, the present invention provides a bicycle, comprising: a front fork to which a front wheel is attached; a rear wheel to which at least one first sprocket wheel is mounted; a frame with a bottom bracket axle to which at least one second sprocket wheel is mounted, which is connected to the first sprocket wheel via a chain; two pedals attached to the bottom bracket axle for exerting a first torque on the bottom bracket axle for advancing the bicycle; handlebars for rotating the front wheel about an upright axis (i.e. the steering axis); wherein the handlebars comprise a rod, e.g., a cylindrical rod, e.g., a handlebar stem, that is, a steerer tube, and wherein the front fork comprises a sliding sleeve or sliding tube (e.g., as a head tube) for receiving the cylindrical rod of the handlebars so that the handlebars are slidably connected to the front fork, e.g. so that the handlebars can slide in an up and down movement relative to (or, in other words, in) the sliding sleeve or sliding bush; wherein the bottom bracket axle further comprises a first freewheel clutch and a second freewheel clutch; and wherein the bicycle further comprises a force transmission mechanism that converts the up and down movement of the handlebars into opposite rotations of the first and second freewheel clutch for selectively exerting a second and third torque on the bottom bracket axle. Thus, both the upward movement and the downward movement are transferred to rotations of the first and second freewheel clutch, these rotations being directed in opposite directions for the two freewheel clutches. The freewheel direction of both freewheel clutches can be oriented in the same direction, and preferably in the backward pedal direction of the pedals. Consequently, for both the up and down movement, one of the two freewheel clutches will couple a force in the forward pedal direction, while the other freewheel clutch rotates freely.

The sliding sleeve or sliding tube and/or the rod can be adapted to allow a sliding movement relative to each other along the steering axis (i.e. in the longitudinal direction of the rod and sliding sleeve or sliding tube), while a rotation (around the steering axis) of the rod relative to the sliding sleeve or sliding tube is substantially impeded, e.g. is prevented. It is an advantage that a rotation of the handlebars around the steering axis is transferred to the front wheel, as is known for conventional bicycles, while an additional degree of freedom of movement, in particular a linear movement in the direction of the steering axis, is provided which can be advantageously used to transmit force to propel the bicycle.

It is an advantage of this bicycle that it not only can be driven via pedals, but also by exerting an upward and/or downward force on the handlebars. In this way, a user can propel the bicycle both with the lower limbs (e.g. the legs) as well as with the upper limbs (e.g. the arms). This may reduce pain in the legs and/or knees.

It is also an advantage that both force supplied in an upward movement of the handlebars and a force supplied in a downward movement of the handlebars can be coupled to a forward drive of the bicycle. For example, a continuous movement of pulling and pushing, whereby the pulling and pushing phases overlap, can provide an efficient and pleasant propelling of the bicycle for the user.

It is an advantage that the forces exerted on the handlebars are not transferred to the front wheel but to the rear wheel, because the grip of the rear wheel is generally better (especially in the winter), but also because as a result possible gears of the bicycle (if it has several sprocket wheels on the rear wheel and a derailleur) can be used for both the movements of the pedals and for the movements of the handlebars. The intensity of the manually applied force can thus be adjusted with the aid of the gears applied to the rear wheel, as is usual for bicycles as known in the art. It is also an advantage that, by coupling the forces exerted on the handlebars to the rear wheel (via the bottom bracket axle), the frequency of the arm movement and the pedalling movement can be coordinated. Such a synchronisation of the pedalling and arm movements contributes to a pleasant and simple propelling of the bicycle by the user. For example, the simple cycle of simultaneous arm and leg movements can easily be learned (or practised) and performed. It should also be noted that the propelling via the arm movement (e.g. temporary) does not have to be performed when pedalling, but that this propelling via the arm movement will cause the pedals to rotate, so that the natural synchronisation of both movements occurs with simultaneous use of both drive mechanisms.

Such a bicycle is also more environmentally friendly because no battery is required.

In an embodiment, the frame is located between the first freewheel clutch and the second freewheel clutch. Or, in other words, in this embodiment the first and the second freewheel clutch are located on opposite sides of the frame.

In an embodiment, the force transmission mechanism comprises a first connecting mechanism for operatively connecting the slidable handlebars to the first freewheel clutch, the first connecting mechanism comprising a first coupling part (e.g. a chain or toothed belt) operatively connected with the first freewheel clutch, arranged such that an upward movement of the handlebars results in a rotation of the first freewheel clutch in a first direction of rotation relative to the bottom bracket; and the force transmission mechanism comprises a second connecting mechanism for operatively connecting the slidable handlebars to the second freewheel clutch, the second connecting mechanism comprising a second coupling portion (e.g. a chain or toothed belt) operatively connected with the second freewheel clutch, arranged such that a downward movement of the handlebars results in a rotation of the second freewheel clutch in a second direction of rotation relative to the bottom bracket, opposite to the first direction of rotation.

It is an advantage of such a force transmission mechanism that, both when a downward force is exerted on the handlebars during the downward movement of the handlebars, and also when an upward force is exerted on the handlebars during the upward movement of the handlebars, these forces are converted to a torque on the bottom bracket axle that helps propel the bicycle.

In an embodiment, the first coupling portion comprises a first chain segment, a first toothed belt segment, a first cord, a first belt, a first cable or a similar elongated first connecting element for coupling to the first freewheel clutch; and the second coupling portion comprises a second chain segment, a second toothed belt segment, a second cord, a second belt, a second cable or a similar elongated second connecting element for coupling to the second freewheel clutch.

It is an advantage that the connecting mechanism does not have to consist of a chain or a toothed belt over its entire length, but only over a portion thereof, namely the part that engages the freewheel clutch.

In an embodiment, the first connecting mechanism further comprises a first retraction mechanism; and the second connecting mechanism further comprises a second retraction mechanism.

In an embodiment, the first retraction mechanism comprises a first retracting spring and/or a first elastic and/or a first elastic cord; and the second retraction mechanism comprises a second retracting spring and/or a second elastic and/or a second elastic cord.

In an embodiment, the first connecting mechanism and the second connecting mechanism are interconnected, such that an upward or downward movement of the handlebars results in an opposite movement of the first and second coupling portion.

It is an advantage of this interconnection that in this way separate retraction mechanisms can be omitted, and that the first and second coupling portion are nevertheless tensioned, and thus that the chance of the freewheel clutch disengaging is minimal.

In an embodiment, the force transmission mechanism further comprises a fourth pulley for guiding the interconnection between the first connecting mechanism and the second connecting mechanism.

In an embodiment, the first freewheel clutch and the second freewheel clutch each comprise a sprocket wheel (referred to as the first sprocket wheel and the second sprocket wheel, respectively), said sprocket wheels being coupled to each other so that a rotation of the first sprocket wheel causes an opposite rotation of the second sprocket wheel. The first coupling portion can be attached to the first freewheel clutch and the second coupling portion can be attached to the second freewheel clutch, so that the first coupling portion unwinds around an axis of the first freewheel clutch during an upward movement of the handlebars and winds up around the axis during a downward movement of the handlebars and so that the second coupling portion unwinds around an axis of the second freewheel clutch during a downward movement of the handlebars and winds up around the axis during an upward movement of the handlebars.

An embodiment may comprise a third sprocket wheel which engages the first sprocket wheel and the second sprocket wheel, respectively, so that the first sprocket wheel and the second sprocket wheel rotate in opposite directions through the coupling via the third sprocket wheel.

In an embodiment of the present invention, the first freewheel clutch may comprise a pulley connection to scale the upward force to be exerted to propel the bicycle down smaller than the downward force transmitted through the second freewheel clutch.

In an embodiment of the present invention, the distance travelled by a chain or belt driving the first freewheel clutch can be reduced by the pulley connection relative to the distance travelled by a chain or belt driving the second freewheel clutch for an equal distance of downward and upward movement of the handlebars.

In an embodiment, the first freewheel clutch may comprise a first sprocket wheel and the second freewheel clutch may comprise a second sprocket wheel, the first sprocket wheel and the second sprocket wheel comprising a different number of teeth, e.g., the first sprocket wheel and the second sprocket wheel having a different diameter. For example, the first coupling portion (e.g., chain or toothed belt) may be operatively connected to the first sprocket wheel of the first freewheel clutch, and the second coupling portion (e.g., chain or toothed belt) may be operatively connected to the second sprocket wheel of the second freewheel clutch.

For example, the first freewheel clutch, which couples the upward movement to a forward pedal movement of the pedals, may comprise a first sprocket wheel with a greater number of teeth and/or with a larger diameter than the second sprocket wheel of the second freewheel clutch, such that upward force that must be applied to the handlebars for the forward movement of the bicycle is relatively smaller than the downward force. This allows the upward force that needs to be applied to the handlebars to be reduced. After all, it is easier (for most users) to push the handlebars down than to pull the handlebars up.

In an embodiment, the bottom bracket axle comprises at least a third freewheel clutch, mounted on the same side of the frame as the first freewheel clutch, but with a different diameter than the first freewheel clutch; and the bottom bracket axle comprises at least a fourth freewheel clutch, mounted on the same side of the frame as the second freewheel clutch, but with a different diameter than the second freewheel clutch; and the bicycle further comprises a handlebar adjustment mechanism with at least a first and a second operating mode, provided to, in the first operating mode, engage the first coupling portion with the first freewheel clutch and to engage the second coupling portion with the second freewheel clutch, and provided to, in the second operating mode, engage the first coupling portion with the third freewheel clutch and to engage the second coupling portion with the fourth freewheel clutch.

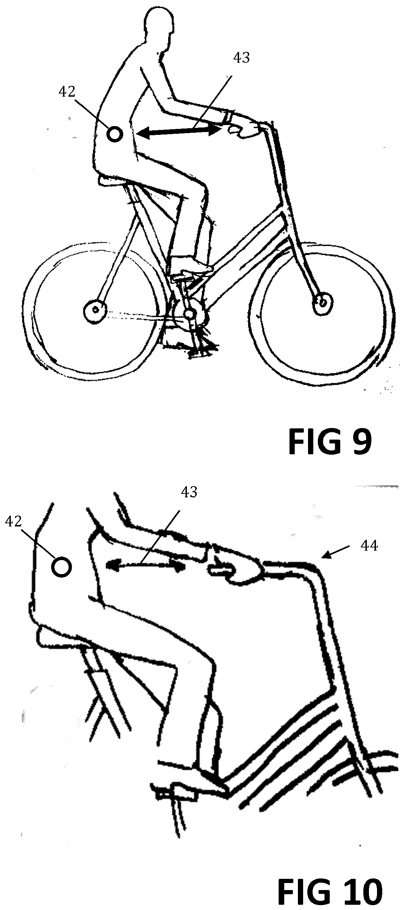

Although not explicitly shown, this could mean in the representation of FIG. 9, for example, that instead of three sprocket wheels on the bottom bracket axle, there are five sprocket wheels on the bottom bracket axle, one very large that is connected via the chain to the rear wheel, and four small ones but with two different diameters.

In an embodiment, the first coupling portion comprises a first chain segment; and the second coupling portion comprises a second chain segment; and the handlebar adjustment mechanism comprises a first derailleur for causing the first chain portion to selectively engage the first freewheel clutch or the third freewheel clutch; and the handlebar adjustment mechanism comprises a second derailleur to selectively engage the second chain portion with the second freewheel clutch or with the fourth freewheel clutch.

Although not explicitly shown, in the modified representation of FIG. 9 this could mean that two derailleurs are added.

In an embodiment, the handlebars may comprise handles adapted to allow a user to hold and move the handlebars. The handles can be at a distance in the range of 10 cm to 50 cm from the front fork, measured in the longitudinal direction of the bicycle.

In an embodiment, the bicycle may comprise a saddle, wherein the saddle may be located at a distance in the range from 30 cm to 35 cm from the handlebars, measured in the longitudinal direction of the bicycle.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarising the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognise that the invention may be embodied or carried out in a manner that achieves or optimizes one advantage or group of advantages as taught herein without necessarily achieving other objects or advantages as may be taught or suggested herein.

These and other aspects of the invention will be apparent from and elucidated with reference to the embodiment(s) described hereinafter.

### Brief description of the drawings

The invention will now be described further, by way of example, with reference to the accompanying drawings, in which:
**FIG. 1(a)** to **FIG. 1(f)** show six clips of a video showing a bicycle according to an embodiment of the present invention. To show the operating principle of this bicycle, the rear wheel of the bicycle is lifted in these clips, and the handlebars are moved up and down.
**FIG. 2(a)** and **FIG. 2(b)** are a schematic representation of a first force transmission mechanism (with two separate retraction mechanisms) that can be used in embodiments of a bicycle according to the present invention.
**FIG. 3** is a schematic representation of a second force transmission mechanism (with an internal connection) that can be used in embodiments of a bicycle according to the present invention.
**FIG. 4** shows a schematic representation of a third force transmission mechanism with interlocking gears that can be used in embodiments of the present invention.
**FIG. 5** to **FIG. 8** show various views of the bicycle shown in FIG. 1, to illustrate the operating principle of the force transmission mechanism.

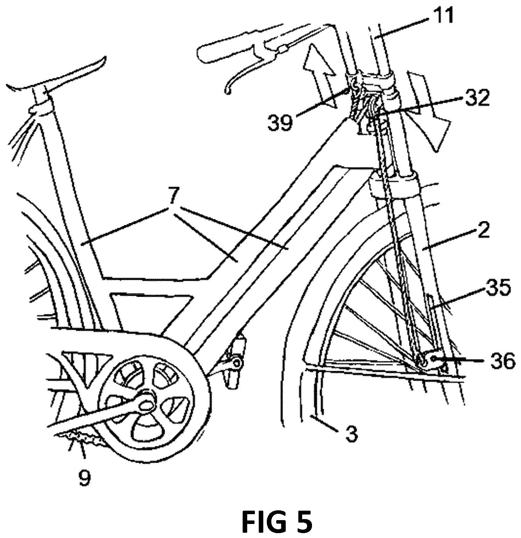

**FIG. 5** shows a side view, and shows a portion of the frame and the front fork.

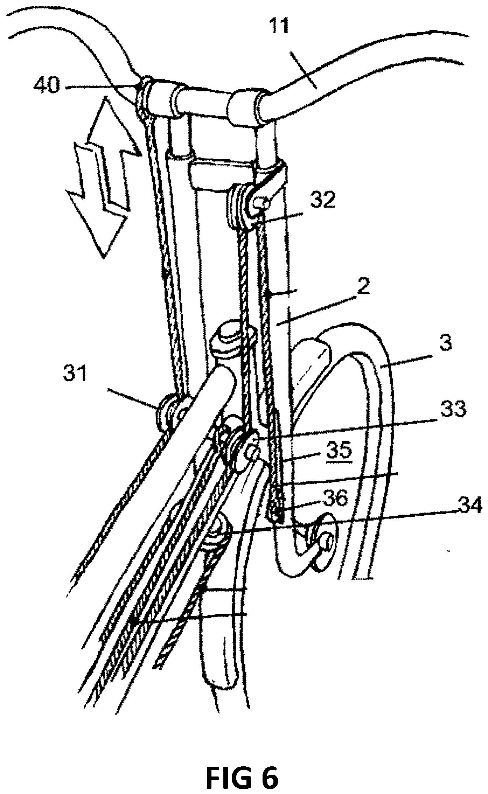

**FIG. 6** is an oblique plan view of the front fork.

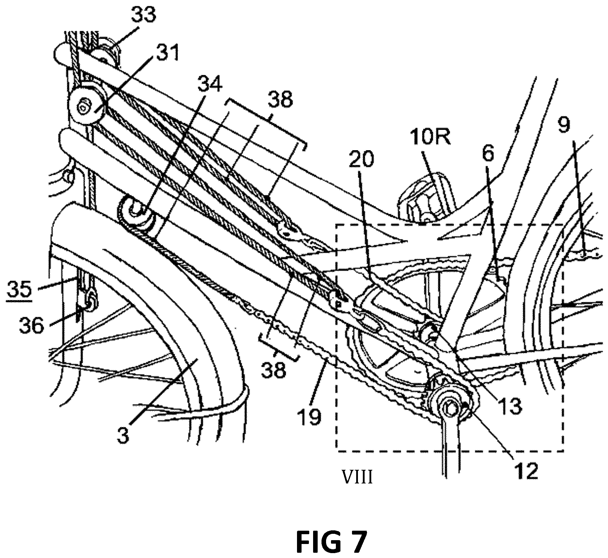

**FIG. 7** shows an oblique plan view of the frame.

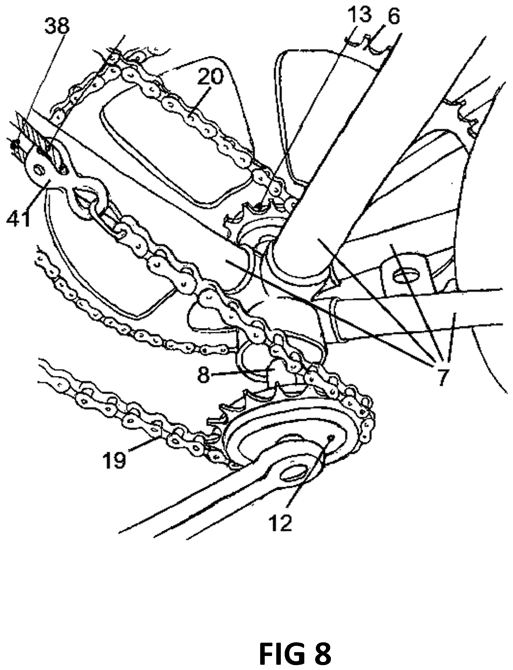

**FIG. 8** shows a portion of FIG. 7 in more detail.
**FIG. 9** shows a user on a bicycle according to embodiments of the present invention.
**FIG. 10** shows a user on a bicycle according to embodiments of the present invention, wherein the bicycle is provided with extended handles.

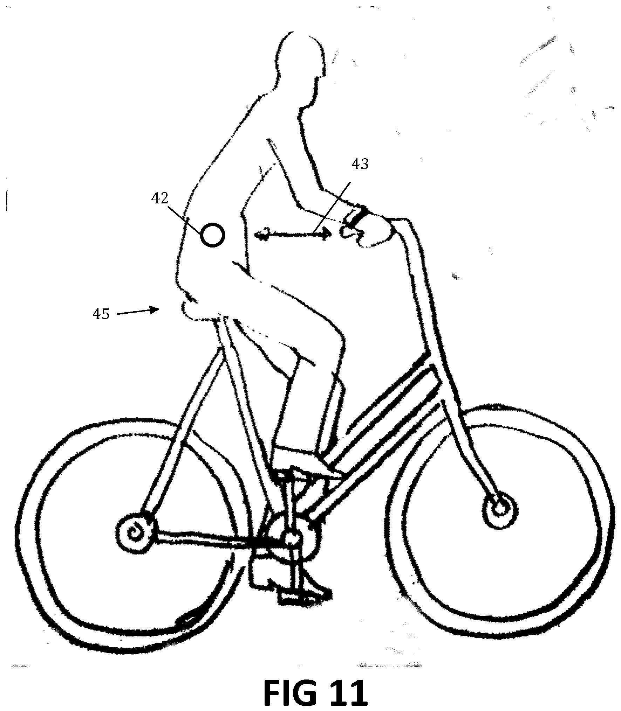

**FIG. 11** shows a user on a bicycle according to embodiments of the present invention, wherein the saddle is placed in a more forward position than usual for prior art bicycles.

The drawings are only schematic and are non-limiting. In the drawings, the size of some of the elements may be exaggerated and not drawn on scale for illustrative purposes. The dimensions and the relative dimensions may not correspond to actual reductions to practice of the invention.

Any reference signs in the claims shall not be construed as limiting the scope.

In the different drawings, the same reference signs refer to the same or analogous elements.

### Detailed description of embodiments of the invention

The present invention will be described with respect to particular embodiments and with reference to certain drawings but the invention is not limited thereto but only by the claims.

It is to be noticed that the term 'comprising', used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression 'a device comprising means A and B' should not be limited to devices consisting only of components A and B. It means that with respect to the present invention, the only relevant components of the device are A and B.

Reference throughout this specification to 'one embodiment' or 'an embodiment' means that a particular feature, structure or characteristic described in connection with the embodiment is included in at least one embodiment of the present invention. Thus, appearances of the phrases 'in one embodiment' or 'in an embodiment' in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. The claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

In the description provided herein, numerous specific details are set forth. However, it is to be understood that embodiments of the invention may be practised without these specific details. In other instances, well-known methods, structures and techniques have not been shown in detail in order not to obscure an understanding of this description.

The inventors of the present invention were confronted with the problem that many cyclists experience pain in the knees, because all power to propel the bicycle must be supplied via the pedals. They came to the idea of providing a bicycle that can also provide power to move the bicycle in another way. More specifically, they came to the idea of providing a mechanism whereby additional power can be supplied by an up and down movement of the handlebars, in such a way that this force is transmitted to the rear wheel.

This offers the important advantage that not all force (or torque) for the forward movement of the bicycle needs to be exerted on the pedals 10L, 10R (thus via the lower limbs), but that at least a part of the force (or torque) can also be supplied via the handlebars (thus via the upper body, in particular the arms of a user).

Tests have shown that this places less strain on the knees mechanically, but has also surprisingly shown that pain in the muscles can also be reduced by reducing or avoiding anaerobic combustion in the lower body, when a portion of the forces is supplied by the upper body.

In a prototype, an existing bicycle was converted, as follows:
a) the handlebars 11 are not fixedly connected to the front fork 2, but slidably connected to the front fork 2, e.g. by providing the front fork with a sliding sleeve or sliding tube for receiving a cylindrical rod from the handlebars 11;
b) a first freewheel clutch 12 and a second freewheel clutch 13 are mounted on the bottom bracket axle 8 (shown in the figures by sprocket wheels 12, 13). These freewheel clutches are preferably (but not necessarily) arranged on opposite sides of the frame 7;
c) the bicycle was further equipped with a force transmission mechanism 14 to ensure that up and down movements of the handlebars 11 are converted to rotations of the first and second freewheel clutch 12, 13, in the opposite sense of rotation relative to the bottom bracket. Namely, this allows that when one freewheel clutch 12 engages and converts the upward movement into the forward pedal movement, the other freewheel clutch 13 rotates freely, and when the other freewheel clutch 13 engages and converts the downward movement into the forward pedal movement the first freewheel clutch 12 rotates freely.

The inventors came up with the idea of transferring the forces exerted on the handlebars to the rear wheel 4 via the bottom bracket axle 8. Transfer to the rear wheel offers the advantage that the grip of the rear wheel and the surface is generally better than that of the front wheel (especially important in winter). Transmission of forces via the bottom bracket axle 8 (and therefore also via the chain) offers the advantage that the existing so-called 'gears' (comprising, among other things, a derailleur connected to the rear wheel) not only work for the pedals 10, but also for the up and down movements of the handlebars 11.

### Referring to the drawings.

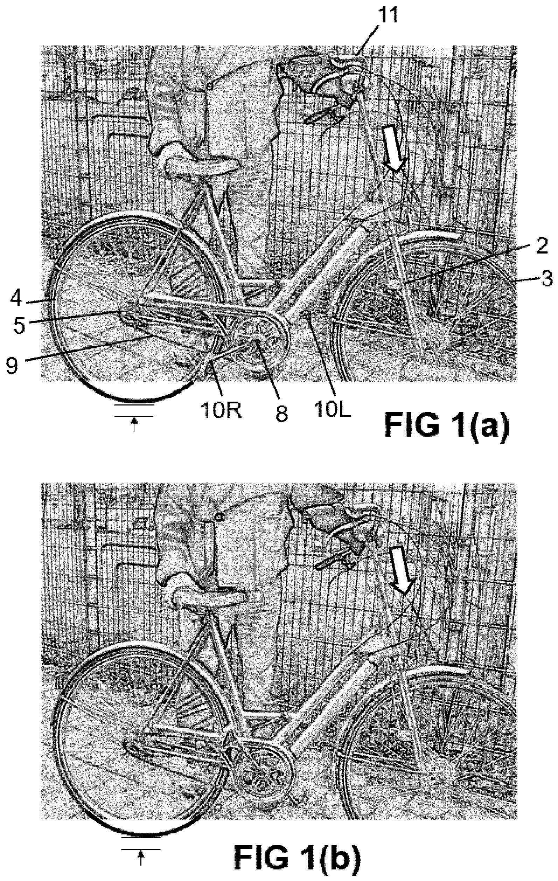

**FIG. 1(a)** to **FIG. 1(f)** show six clips of a video showing the main operating principle of a bicycle 1. In this video, the rear of the bicycle 1 is lifted (by the saddle), so that the rear wheel 4 does not touch the ground. In addition, the handlebars 11 are moved up and down over a so-called stroke with an upper position and a lower position.

In **FIG. 1(a)**, the handlebars 11 are in the upper position, and are pushed down (in the direction of the white arrow). FIG. 1a can be seen as the start of a new cycle.

In **FIG. 1(b)**, the handlebars 11 are pushed down, and are located approximately halfway between the upper position and the lower position. As can be seen from the position of the pedals 10, the bottom bracket axle 8 is indeed rotated by this downward movement of the handlebars 11. FIG. 1b can be seen as the situation after about 25% of the cycle.

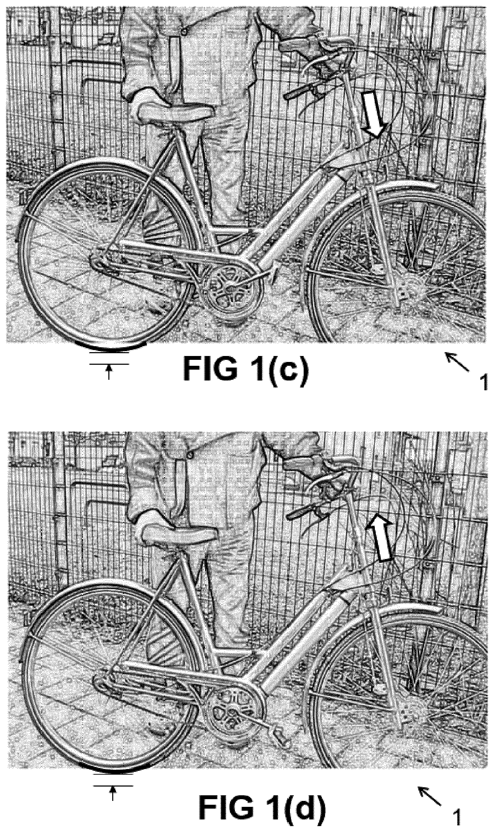

In **FIG. 1(c)**, the handlebars 11 are still pressed downwards, and have almost reached their lower position. FIG. 1c can be seen as the situation after about 45% of the cycle.

In **FIG. 1(d)**, the handlebars 11 are past the lower position, and the handlebars 11 are pulled upwards, as indicated by the white arrow. FIG. 1d can be seen as the situation after about 55% of the cycle.

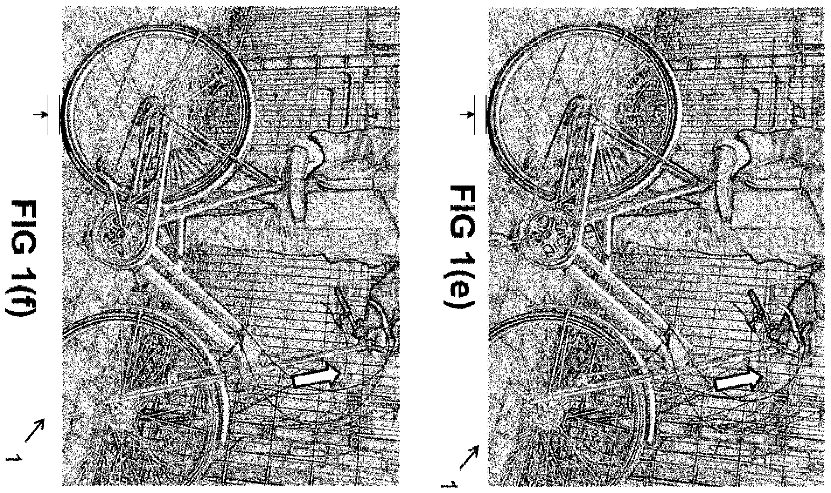

In **FIG. 1(e)**, the handlebars 11 are still being pulled up, and are now about halfway between the lower and the upper position. FIG. 1e can be seen as the situation after about 75% of the cycle.

In **FIG. 1(f)**, the handlebars 11 are almost back in the upper position, as shown in FIG. 11a. FIG. 1f can be seen as the situation after about 95% of the cycle, after which the cycle repeats.

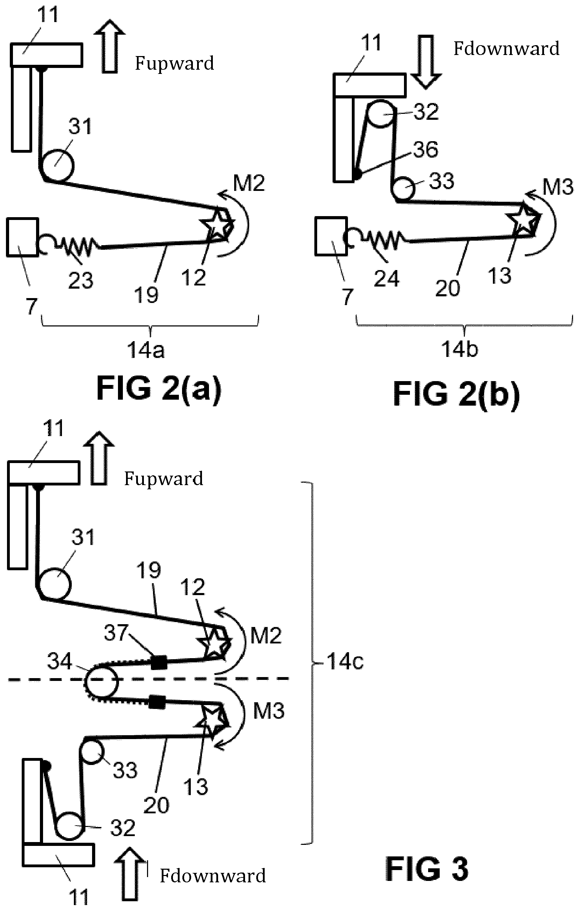

**FIG. 2(a)** and **FIG. 2(b)** are a schematic representation of a force transmission mechanism 14a, 14b that can be used in a bicycle 11 according to the present invention. Shown is a schematic representation of the handlebars 11, symbolically represented by an L-shape with a substantially vertical bar and substantially horizontal handles.

The force transmission mechanism of FIG. 2(a) and FIG. 2(b) actually comprises two separately operating connecting mechanisms 14a and 14b.

The first connecting mechanism 14a connects the handlebars 11 (more particularly a higher located portion of the handlebars) to the first freewheel clutch 12, e.g. sprocket wheel 12. For this purpose, the first connecting mechanism 14a is connected at one end to the handlebars 11, and comprises (over at least a part of its length) a first coupling portion 19, e.g. in the form of a chain segment or a toothed belt segment which engages with the sprocket wheel 12. In the example of FIG. 2 (a), the other end of the connecting mechanism 14a is connected to a first retraction mechanism, e.g., a first retracting spring 23, to keep the chain segment 19 tensioned. The retracting spring 23 is connected to the frame 7. An elastic cord or the like can also be used instead of the retracting spring 23.

As shown in FIG. 2(a), the first connecting mechanism 14a can further comprise a first pulley 31, preferably positioned such that the connecting mechanism 14a can be at least partially, but preferably largely, concealed or incorporated in one or more tubes, e.g. tubes of the frame 7 (e.g. as shown in FIG. 6 and FIG. 1).

The second connecting mechanism 14b connects the handlebars 11 (more particularly a lower part of the handlebars) to the second freewheel clutch 13, e.g. sprocket wheel 13. For this purpose, the second connecting mechanism 14b is connected at one end to the handlebars 11 (e.g. to a protrusion 36 thereof, see FIG. 6), and comprises (over at least a portion of its length) a second coupling portion 20, e.g. in the shape of a chain segment or a toothed belt segment that engages with the sprocket wheel 13. In the example of FIG. 2(b), the other end of the connecting mechanism 14b is connected to a second retraction mechanism, e.g., a second retracting spring 24, to keep the chain segment 20 tensioned. The retracting spring 24 is connected to the frame 7. Instead of the retracting spring 24, an elastic cord or the like can also be used.

As shown in FIG. 2(b), the second connecting mechanism 14b can further comprise a second pulley 32 and a third pulley 33, preferably positioned such that the connecting mechanism 14b can be at least partially, but preferably largely concealed or built into in one or more tubes of the frame 7 (see FIG. 6 and FIG. 1).

The operating principle of the force transmission mechanism 14 is as follows:
* During a downward movement of the handlebars 11, the chain portion 19 (see FIG. 2a) is pulled down (retracted) by the retracting spring 23, and the freewheel clutch 12 will rotate in the opposite direction than the bottom bracket axle 8 normally rotates when the bicycle is moving forward (in the representation of FIG. 2a, in a clockwise direction), and will therefore rotate freely (not providing torque), but at the same time (see FIG. 2b) the chain portion 20 will be pulled up by the handlebars 11, against the force of the retracting spring 24, and the freewheel clutch 13 will rotate in the same direction as the bottom bracket axle 8 normally rotates when the bicycle is moving forward (in the representation of FIG. 2b, anticlockwise) and can therefore provide torque.

If during the downward movement of the handlebars 11 a downward force Fdownward is exerted on the handlebars 11, this will result in a torque M3 on the bottom bracket axle 8 supplied by the second freewheel clutch 13. This torque M3 is in turn transmitted to the rear wheel via the known chain 9.

* During an upward movement of the handlebars 11, the chain portion 19 (see FIG. 2a) is pulled up against the force of the retracting spring 23, and the freewheel clutch 12 will rotate in the same direction as the bottom bracket axle 8 (in the representation of FIG. 2a, anticlockwise), and can therefore provide torque. At the same time, the chain portion 20 will be pulled down (retracted) by the retracting spring 24, and the freewheel clutch 13 will rotate in the opposite direction as the bottom bracket axle 8 normally rotates when the bicycle is moving forward (in the representation of FIG. 2b, clockwise), and will therefore rotate freely.

If during this upward movement an upward force Fupward is exerted on the handlebars 11, this will result in a torque M2 on the bottom bracket axle 8, supplied by the freewheel clutch 12. This torque M2 is in turn transmitted to the rear wheel via the known chain 9.

The attentive reader will thus note from FIG. 1 and FIG. 2 that both during the downward movement of the handlebars (when a downward force is then applied) and during the upward movement of the handlebars (when an upward force is then applied) torque can be exerted on the bottom bracket axle 8, albeit alternately transmitted by the first freewheel clutch 12 and the second freewheel clutch 13.

**FIG. 3** is a schematic representation of a second force transmission mechanism that can be used in a bicycle 1 according to the present invention. This mechanism 14 can be seen as a variant of the combination of the mechanisms 14a and 14b described in FIG. 2a and FIG. 2b, but the operation is largely the same.

The main difference is that in the force transmission mechanism 14a and 14b of FIG. 2(a) and FIG. 2(b) each have a separate retraction mechanism, e.g., in the form of a first and second retracting spring 23, 24, for tensioning the chain segment 19 and the chain segment 20, respectively, while in the force transmission mechanism 14c of FIG. 3, the two chain segments 19 and 20 are interconnected. This interconnection can be made in any known manner, e.g. by means of an elastic or non-elastic cord or by means of a single chain or another chain (e.g. smaller links) than the chain which engages with the sprocket wheels 12, 13, or by means of a toothed belt or a non-toothed belt, or in any other suitable manner.

In the example of FIG. 3 another chain is used, which is diverted over a fourth pulley 34 in order to hide from view or conceal the connections as much as possible (see also FIG. 7 and FIG. 8).

It is noted that the arrow of Fdownward at the bottom of FIG. 3 is directed upwards, because the second connecting mechanism 14b is mirrored with respect to FIG. 2(b), as schematically represented by the dotted line.

In an embodiment of the present invention, the first freewheel clutch may comprise a first sprocket wheel and the second freewheel clutch may comprise a second sprocket wheel, the first sprocket wheel and the second sprocket wheel comprising a different number of teeth. For example, the first freewheel clutch, which couples the upward movement to a forward pedal movement of the pedals, may comprise a first sprocket wheel with a greater number of teeth and/or with a larger diameter than the second sprocket wheel of the second freewheel clutch, such that upward force that must be applied to the handlebars for the forward movement of the bicycle is relatively smaller than the downward force. As a result, the same advantages can be obtained as by applying the compression spring 25, as described above. However, any losses (e.g. due to friction) in the form of a difference between the stored energy in the compression spring and the energy released again during the release of the compression spring can be substantially avoided by this alternative, while the upward force that needs to be exerted on the handlebars can be reduced. This has the advantage that it may be easier for a user to push the handlebars down than to pull the handlebars up.

In an embodiment of the present invention, for example, as an alternative to or addition to the embodiment described above with two different sprocket wheels, the first freewheel clutch, which couples the upward movement to a forward pedal movement of the pedals, may comprise a pulley connection to scale the upward force that needs to be exerted to propel the bicycle down smaller than the downward force. For example, a smaller forward rotation of the pedals can be provided per unit of movement of the handlebars in the upward movement than per unit of movement of the handlebars in the downward movement, for example by reducing the distance travelled by a chain or belt which drives the first freewheel clutch, e.g., halving, by means of the pulley connection relative to the distance travelled in the upward movement of the handlebars.

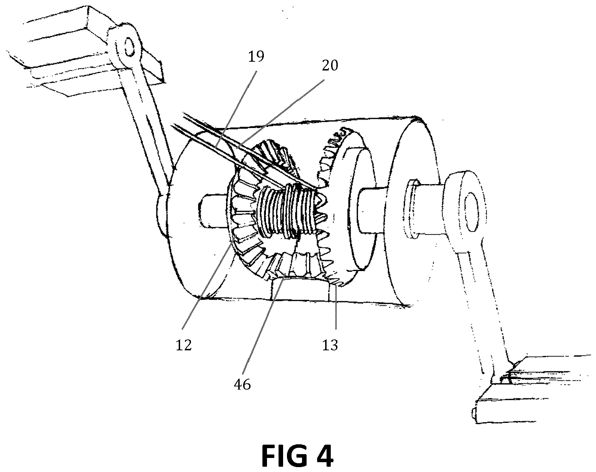

**FIG. 4** shows a schematic representation of a third exemplary force transmission mechanism, with interlocking gears, that can be used in embodiments of the present invention. In embodiments of the present invention, a first connecting mechanism, e.g., the first coupling portion 19 in the form of, e.g., a cord, a belt, a cable, or a similar elongated connecting element, can connect the handlebars 11 (more particularly, an elevated portion of the handlebars) to the first freewheel clutch 12 coupling, e.g. sprocket wheel 12, and a second connecting mechanism (e.g. a second coupling portion 20 such as a cord, belt, cable or similar elongated connecting element) can connect the handlebars 11 (more particularly a lower part of the handlebars) to the second freewheel clutch. The first freewheel clutch and the second freewheel clutch each comprise a sprocket wheel, these sprocket wheels being coupled to each other so that a rotation of one sprocket wheel causes an opposite rotation of the other sprocket wheel. For example, the two sprocket wheels may be coupled to each other through a third sprocket wheel 46 to to bring about such opposite rotation, as shown in FIG. 4. Upon upward movement of the handlebars 11, the first coupling portion 19, which is attached to the first freewheel clutch 12, can unwind from the shaft of the first freewheel clutch (thereby causing a rotation of the sprocket wheel of the first freewheel clutch), and, through the transfer to the second freewheel clutch, winding up the second coupling portion 20 around the axis of the second freewheel clutch. Upon downward movement of the handlebars 11, the second coupling portion 20, which is attached to the second freewheel clutch 13, can unwind from the shaft of the second freewheel clutch (thereby causing a rotation of the sprocket wheel of the second freewheel clutch), and, through the transfer to the first freewheel clutch, winding up the first coupling portion 19 around the axis of the first freewheel clutch. As a result, both the first and the second coupling portion can remain tensioned in a simple manner over the entire cycle of up and down movements of the handlebars. The first and the second freewheel clutch can be mounted on the bottom bracket axle so that a backward rotation (i.e. against the driving forward pedal movement) of the sprocket wheels of the freewheel clutches is disengaged from the bottom bracket axle, but a forward rotation is transferred to a forward rotation (in the direction of the driving forward pedal movement) of the bottom bracket axle.

For example, the first and the second sprocket wheel can be arranged concentrically with the bottom bracket axle, so that they can rotate vertically. The third sprocket wheel can be oriented perpendicularly to the direction of the first and the second sprocket wheel, e.g. horizontally. By coupling the rotation of the first sprocket wheel and the second sprocket wheel in the opposite direction, a tightening force on one of the coupling parts, when partially wound around the axis of the corresponding freewheel clutch, causes this freewheel clutch to rotate, and the opposite rotation of the other freewheel clutch will wind the other coupling portion around the axis of this other freewheel clutch. The first freewheel clutch and the second freewheel clutch may, for example, each comprise a reel for winding up the first coupling portion and the second coupling portion, respectively.

It is an advantage that the first and the second freewheel clutch can easily be integrated into a housing of (or on) the bottom bracket axle.

**FIG. 5** shows a side view of a portion of a bicycle according to the present invention. As shown, the force transmission mechanism 14 can be largely concealed or built into one or more tubes of the frame 7.

In the example of FIG. 5, the front fork 2 has an opening or slot 35 out of which a protrusion 36 protrudes, connected to the upright bar of the handlebars 11 moving up and down in the front fork 2, e.g. in a sleeve thereof. In this way, for example, the second connecting mechanism 14b can be connected to a 'lower located point' of the handlebars 11. The first connecting mechanism is connected to a higher located point of the handlebars, e.g. via the clamp 39, but the invention is of course not limited thereto.

**FIG. 6** shows a variant of FIG. 5, using a force transmission mechanism shown in FIG. 3, the connecting mechanisms 14c being shown without being concealed, for illustrative purposes. Also in this figure the slot 35 and the protrusion 36 are clearly visible. In this example, the first connecting mechanism 14a is attached to a higher located point of the handlebars 11 via a loop connection 40.

**FIG. 7** shows an oblique plan view of the frame 7. The first freewheel clutch 12 and the second freewheel clutch 13 in the form of sprocket wheels, mounted on either side of the frame 7, are clearly visible in this drawing. A first and second chain segment 19, 20, respectively, runs over these sprocket wheels 12, 13. Although functionally the entire connecting mechanism 14c may consist of one long chain, this is not necessary, since such a chain only needs to be in contact with the sprocket wheels 12, 13 over a limited range thereof. It is therefore sufficient that the connecting mechanism comprises only over part of its length a chain segment 19 and a chain segment 20, which are interconnected, e.g. by means of e.g. braided steel wire or cord or the like.

**FIG. 8** shows a portion of FIG. 7 in more detail. In this figure it can be seen, for example, how a cord 38 or steel wire or the like can be connected to the chain segment 19 by means of a connector 41, but other suitable ways can also be used.

**FIG. 9** shows a user on a bicycle according to embodiments of the present invention. In this embodiment, the bicycle is configured and dimensioned according to conventional proportions, as known in the art. The user's centre of gravity 42 is typically approximately vertically above the pelvis in a normal cycling position (for city bicycles and the like). In such a conventional configuration, the reach range 43, i.e. the distance between the user and the handles of the handlebars, is relatively large.

**FIG. 10** shows a user on a bicycle according to embodiments of the present invention. In this embodiment, the bicycle is configured and dimensioned according to conventional proportions, as is known in the art, but the handlebars is provided with extended handles 44 such that the point of engagement on the handlebars for the hands is closer to the user. The user's centre of gravity 42 is approximately above the pelvis, but the distance 43 between the user and the handles of the handlebars is smaller than in the example shown in FIG. 9.

For example, in a bicycle according to embodiments of the present invention, the handlebars may comprise handles adapted to allow a user to hold and move the handlebars, these handles being located at a distance from the front fork (i.e. to the headset), measured in the length direction, i.e. the longitudinal direction, of the bicycle (which, for example, extends between the centre of the rear wheel and the centre of the front wheel), this distance being in the range of 10 cm to 50 cm, preferably in the range of 20 cm to 40 cm, e.g. 25 cm to 34 cm.

**FIG. 11** shows a user on a bicycle according to embodiments of the present invention. In this embodiment, the bicycle is configured and dimensioned according to conventional proportions as known in the art, but the saddle 45 is placed in a more forward position than usual. The user's centre of gravity 42 is approximately above the pelvis, but the distance 43 between the user and the handles of the handlebars is smaller than in the example shown in FIG. 9.

For example, a conventional distance from the saddle to the handlebars can be determined such that the fist of the user just touches the handlebars when the elbow rests against the saddle point. The average distance from the elbow centre to the grip centre is approximately 36 cm for adult men and approximately 33 cm for adult women, with the 10-percentile at approximately 34 cm and 31 cm, respectively, and the 90-percentile at approximately 38 cm and 35 cm, respectively.

In a bicycle according to embodiments of the present invention, the saddle (or the saddle point of the saddle) can be located at a distance (measured in the longitudinal direction of the bicycle) from the handlebars (i.e. the handles of the handlebars) in the range of 20 cm to 35 cm, such as in the range of 25 cm to 30 cm.

It is an advantage of a relatively small reach range that, because the hands (on the handles of the handlebars) of the user are closer to the pelvis, it is easier to carry out a lifting movement on the handlebars.

**REFERENCE NUMERALS**

| | | | |
|---|---|---|---|
| 1 | bicycle | 2 | front fork |
| 3 | front wheel | 4 | rear wheel |
| 5 | first sprocket wheel | 6 | second sprocket wheel |
| 7 | frame | 8 | bottom bracket axle |
| 9 | chain | 10L, 10R | pedals |
| 11 | handlebars | | |
| 12 | first freewheel clutch | 13 | second freewheel clutch |
| 14 | force transmission mechanism | | |
| 15 | first connecting mechanism | 16 | second connecting mechanism |
| 17 | first coupling portion | 18 | second coupling portion |
| 19 | first chain segment | 20 | second chain segment |
| 21 | first retraction mechanism | 22 | second retraction mechanism |
| 23 | first retracting spring | 24 | second retracting spring |
| 25 | compression spring | 26 | upright axis |
| 31 | first pulley | 32 | second pulley |
| 33 | third pulley | 34 | fourth pulley |
| 35 | slot | 36 | protrusion |
| 37 | connecting elements | 38 | cord or steel wire or the like |
| 39 | clamp | 40 | loop connection |
| 41 | connector | 42 | user's centre of gravity |
| 43 | reach range of user to handlebars | 44 | extended handles |
| 45 | saddle | 46 | sprocket wheel |

## Claims

1. A bicycle (1) comprising:
- a front fork (2) to which a front wheel (3) is mounted;
- a rear wheel (4) in which at least one first sprocket wheel (5) is mounted;
- a frame (7) with a bottom bracket axle (8) to which at least one second sprocket wheel (6) is mounted, which is connected to the first sprocket wheel (5) via a chain (9);
- two pedals (10L, 10R) mounted to the bottom bracket axle (8) for exerting a first torque on the bottom bracket axle for propelling the bicycle; and
- handlebars (11) for rotating the front wheel (3) about an upright axis;
wherein the handlebars (11) comprise a rod and wherein the front fork (2) comprises a sliding sleeve or sliding tube for receiving the rod so that the handlebars can slide up and down with respect to the sliding sleeve or sliding tube;
wherein the bottom bracket axle (8) further comprises a first freewheel clutch (12) and a second freewheel clutch (13);
the bicycle (11) further comprising a force transmission mechanism (14) that converts the up and down movement of the handlebars (11) into opposite rotations of the first and second freewheel clutch (12, 13) for selectively exerting a second and third torque on the bottom bracket axle (8).

2. A bicycle (11) according to claim 1, wherein the frame (7) is situated between the first freewheel clutch (12) and the second freewheel clutch (13).

3. A bicycle according to claim 1 or 2,
- wherein the force transmission mechanism (14) comprises a first connecting mechanism (14a) for operatively connecting the slidable handlebars (11) to the first freewheel clutch (12), the first connecting mechanism (14a) comprising a first coupling portion (19) operatively connected with the first freewheel clutch (12), arranged such that an upward movement of the handlebars (11) results in a rotation of the first freewheel clutch (12) in a first direction of rotation relative to the bottom bracket (8);
- and wherein the force transmission mechanism (14) comprises a second connecting mechanism (14b) for operatively connecting the slidable handlebar (11) to the second freewheel clutch (13), the second connecting mechanism (14b) comprising a second coupling portion (20) operatively connected with the second freewheel clutch (13), arranged such that a downward movement of the handlebars (11) results in a rotation of the second freewheel clutch (13) in a second direction of rotation relative to the bottom bracket (8), opposite to the first direction of rotation.

4. A bicycle (1) according to claim 3,
wherein the first coupling portion (19) comprises a first chain segment, a first toothed belt segment, a first cord, a first belt, a first cable or a similar elongated first connecting element for coupling to the first freewheel clutch (12);
and wherein the second coupling portion (20) comprises a second chain segment, a second toothed belt segment, a second cord, a second belt, a second cable or a similar elongated second connecting element for coupling to the second freewheel clutch (13).

5. A bicycle according to claim 3 or 4,
wherein the first connecting mechanism (14a) further comprises a first retraction mechanism (23);
and wherein the second connecting mechanism (14b) further comprises a second retraction mechanism (24).

6. A bicycle according to claim 5,
wherein the first retraction mechanism comprises a first retracting spring (23) and/or a first elastic and/or a first elastic cord;
and wherein the second retraction mechanism comprises a second retracting spring (24) and/or a second elastic and/or a second elastic cord.

7. A bicycle according to claim 3 or 4,
wherein the first connecting mechanism (14a) and the second connecting mechanism (14b) are interconnected, such that an upward or downward movement of the handlebars (11) results in an opposite movement of the first and second coupling portion (19, 20).

8. A bicycle according to claim 7, wherein the force transmission mechanism (14) further comprises a fourth pulley (34) for guiding the interconnection between the first connecting mechanism (14a) and the second connecting mechanism (14b).

9. A bicycle according to claim 3 or 4, wherein the first freewheel clutch (12) and the second freewheel clutch (13) each comprise a sprocket wheel, these sprocket wheels being coupled to each other so that a rotation of the first sprocket wheel causes an opposite rotation of the second sprocket wheel, the first coupling portion (19) being attached to the first freewheel clutch (12) and the second coupling portion (20) being attached to the second freewheel clutch (13), so that the first coupling portion (19) unwinds around an axis of the first freewheel clutch (12) with an upward movement of the handlebars (11) and winds up around the axis with a downward movement of the handlebars and so that the second coupling portion (20) unwinds around an axis of the second freewheel clutch (12) with a downward movement of the handlebars (11) and winds up around the axis with an upward movement of the handlebars.

10. A bicycle according to claim 9, comprising a third sprocket wheel (46) which engages the first sprocket wheel and the second sprocket wheel, respectively, so that the first sprocket wheel and the second sprocket wheel rotate in opposite directions through the coupling via the third sprocket wheel.

11. A bicycle according to any of the previous claims, wherein the first freewheel clutch comprises a pulley connection to scale the upward force to be exerted to propel the bicycle forward down smaller than the downward force transmitted via the second freewheel clutch.

12. A bicycle according to any of the previous claims, wherein the first freewheel clutch comprises a first sprocket wheel and the second freewheel clutch comprises a second sprocket wheel, and wherein the first sprocket wheel and the second sprocket wheel comprise a different number of teeth and/or have a different diameter.

13. A bicycle (1) according to any of claims 3 to 12,
wherein the bottom bracket axle (8) comprises at least a third freewheel clutch mounted on the same side of the frame (7) as the first freewheel clutch (12), but with a different diameter than the first freewheel clutch (12);
and wherein the bottom bracket (8) comprises at least a fourth freewheel clutch mounted on the same side of the frame (7) as the second freewheel clutch (13), but with a different diameter as the second freewheel clutch;
and wherein the bicycle (1) further comprises a handlebar adjustment mechanism with at least a first and a second operating mode, provided to, in the first operating mode, engage the first coupling portion (19) with the first freewheel clutch (12) and to engage the second coupling portion (20) with the second freewheel clutch (13), and provided to, in the second operating mode, engage the first coupling portion (19) with the third freewheel clutch and to engage the second coupling portion (20) with the fourth freewheel clutch.

14. A bicycle (1) according to claim 13,
wherein the first coupling portion (19) comprises a first chain segment;
and wherein the second coupling portion (20) comprises a second chain segment;
and wherein the handlebar adjustment mechanism comprises a first derailleur for causing the first chain portion (19) to selectively engage the first freewheel clutch (12) or the third freewheel clutch;
and wherein the handlebar adjustment mechanism comprises a second derailleur for selectively engaging the second chain portion (20) with the second freewheel clutch (13) or with the fourth freewheel clutch.

15. A bicycle (1) according to any of the previous claims, wherein the handlebars comprise handles located at a distance in the range of 10 cm to 50 cm from the front fork, this distance being measured in the longitudinal direction of the bicycle, and/or wherein the saddle is at a distance in the range of 30 cm to 35 cm from the handlebars, measured in the longitudinal direction of the bicycle.
